# EUROPEAN PATENT APPLICATION

(11) **EP 4 474 798 A1**
(43) Date of publication of application: **11.12.2024**
(21) Application number: 23020296.2
(22) Date of filing: 16.06.2023
(51) Int. Cl.: G01N 23/20008, G01N 21/33

(54) **MULTISPECTRAL IMAGING SYSTEM FOR EXTREME ULTRAVIOLET AND SOFT X-RAY COHERENT RADIATION**

(30) Priority: 06.06.2023 GR 20230100453
(71) Applicant: Iknowhow S.A., 15451 Athens (GR); Hellenic Mediterranean University Special Account For Research Funds, 71410 Heraklion Crete (GR); Technical University of Crete - Special Account of Research Funds, 731 00 Chania (GR)
(72) Inventor: Kotsikaris, Gregory, . (GR); Balas, Konstantinos, . (GR); Dimitriou, Vasileios, . (GR); Alexandros, Skoulakis, . (GR); Benis, Emmanouil, . (GR); Papadogiannis, Nektarios, . (GR); Fotopoulou, Aikaterini, . (GR); Bania, Polyxeni, . (GR); Tatarakis, Michael, . (GR); Orfanos, Ioannis, . (GR); Pachos, Efthimios, . (GR); Bakarezos, Efthymios, . (GR); Petrakis, Stylianos, . (GR)

(57) **Abstract**

The invention relates to a multispectral imaging system in the spectral region of the extreme ultraviolet (XUV) and soft X-ray coherent radiation. The generation of the XUV and soft X-ray coherent radiation is achieved by the interaction of strong laser pulses of few tens of fs time duration, (1 fs = 10⁻¹⁵ s) with gaseous targets. The process is implemented in a semi-infinite cell filled with a suitable gas and the generated beam is guided into a chamber where the laser beam filtered out first, and then the desired wavelength is selected in a controlled and automated manner, by selecting multiple suitable pairs of reflective filters, for multispectral imaging. The beam of the selected wavelengths is guided into the chamber of the sample to be imaged where the spectral images are recorded using the coherent multispectral diffractive imaging method. With this invention the imaging of structures containing microstructures of different dimensions within them, from ~1 micrometer to ~10 nanometers, can be achieved in an automated manner by the use of alternating pairs of reflective filters.

## Description

The present invention relates to a multispectral imaging system at wavelengths of extreme ultraviolet up to soft X-rays, and with particular application to the method of coherent diffractive imaging. In spectral imaging, an image of an object is produced using a specific wavelength range of electromagnetic radiation, which is called a spectral image. In multispectral imaging, multiple spectral images of an object are produced, each using electromagnetic radiation with a different wavelength range. Coherent diffractive imaging involves the imaging of an object by directly detecting the electromagnetic radiation scattered by it, without the use of imaging optics, and involves the computational reconstruction of an image of the object.

Systems and apparatus for multispectral imaging of objects are known from the Hellenic Industrial Property Organisation patent with filing numbers OBI 970100395 and OBI 20200402334 and from US8416414B2 and US10314490B2. They relate to multispectral imaging using spectral ranges of electromagnetic radiation from the ultraviolet to the infrared and imaging of structures with a resolution of ≥1 micrometer (e.g., see C. Balas et al; Handbook of Biomedical Optics, pp. 131-163, 2016, C. Balas, Meas. Sci. Technol. 20, 104020, 2009, G. Themelis et al; Opt. Lett. 33, pp. 1023-1025, 2008, S. Andersson-Engels et al; Appl. Opt. 33, pp. 8022-8029, 1994, V. Ntziachristos et al; Nat. Biotechnol. 23, pp. 313-320, 2005). Also, systems and devices for coherent diffractive imaging at specific wavelengths (without multispectral imaging) of extreme ultraviolet and soft X-rays (e.g., see J. Miao et al; Science 348, pp. 530-535, 2015, J. Miao et al; IEEE J. Sel. Top. Quantum. Electron. 18, pp. 399-410 2012, B. Zhang et al; Opt. Express 21, pp. 21970-21980, 2013, M.D. Seaberg et al; Optica 1, pp. 39-44, 2014, G. Zheng et al; Nature Photon. 7, pp. 739-745, 2013, A.M. Maiden et al; Ultramicroscopy 10, pp. 1256-1262, 2009), are known from US 2017/0069116A1 and US 2022/0100094 A1.

However, no system or method has so far been developed or implemented that allows for coherent multispectral imaging at extreme ultraviolet and soft X-ray wavelengths. The present invention enables this possibility by extending the existing capabilities of imaging systems in general, and in particular those of coherent diffractive imaging, to extreme ultraviolet and soft X-ray wavelengths, removing a major limitation of their use, and enabling coherent multispectral diffractive imaging. In particular, the invention allows imaging of structures with a resolution of <1 micrometer, and potentially in the regions of a few nanometers, due to the wavelength of the radiation. In addition, the invention provides the possibility for use at a high repetition rate of image recording due to the way the extreme ultraviolet and soft X-ray coherent radiation is generated (generation of high harmonics of infrared and ultrashort laser pulses in a semi-infinite noble gas cell).

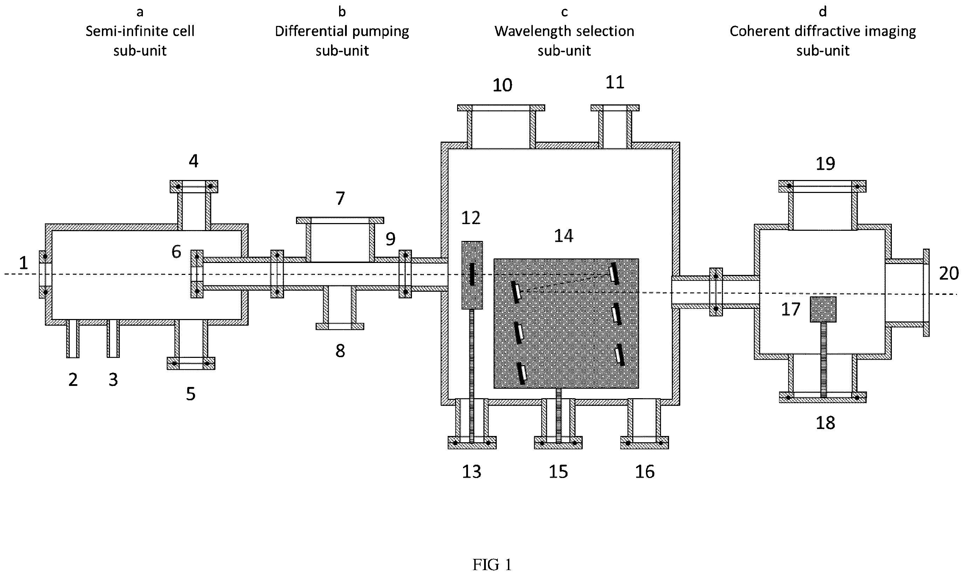

The invention is shown in FIG 1 by way of example and schematically.

The invention comprises four parts:
(a) A semi-infinite cell sub-unit (FIG 1,a) (1,2,3,4,5,6). In this sub-unit, the production of extreme ultraviolet and soft X-ray coherent radiation is carried out by the mechanism of high harmonic generation by the interaction of ultrashort laser pulses with gaseous targets. The laser beam enters the semi-infinite cell through a suitable optical window (1). A vacuum is created in the semi-infinite cell and filled with a suitable gas (2) at a controlled pressure (3). The semi-infinite cell has an optical window for visually monitoring the interaction area (4) and an optical window for illuminating the interaction area (5). The laser beam is focused onto a thin copper sheet at the end of the semi-infinite cell (6), which it penetrates through a hole of the order of 100 micrometers. In this area, the extreme ultraviolet and soft X-ray coherent radiation is produced and propagates together with the laser beam into the differential pumping chamber.
(b) Differential pumping sub-unit (FIG 1,b) (7,8,9). This sub-unit is necessary for the matched pressure reduction between the semi-infinite cell (50 mbar) and the rest of the device (parts c and d, 1×10⁻⁵ mbar). The necessary pressure (1×10⁻⁴ mbar) in the differential pumping sub-unit is achieved by means of a turbomolecular vacuum pump (7) and controlled by a measuring instrument (8). Finally, the sub-unit has a 3 mm diameter hole (9) for the partial blocking of the laser beam and the complete transmission of the generated extreme ultraviolet and soft X-ray coherent radiation.
(c) Wavelength selection sub-unit (FIG 1,c) (10,11,12,13,14,15,16). In this sub-unit, the controlled selection of different wavelengths of extreme ultraviolet and soft X-ray coherent radiation is achieved, thus allowing for multispectral imaging with the method of coherent diffractive imaging (part d of the device). The necessary pressure (1×10⁻⁵ mbar) in the wavelength selection sub-unit is achieved by means of a turbomolecular vacuum pump (10) and controlled by a measuring instrument (11). The residual laser beam is completely blocked by special metal filters (12), with which the selection of the spectral range of extreme ultraviolet and soft X-ray radiation is also achieved. The position of the filters in the optical arrangement is controlled by an optomechanical guide (13). The specific wavelengths desired for multispectral imaging are selected using pairs of special reflective filters mounted onto an optomechanical base that allows their interchangeability (14). FIG 1 shows the case of three such filter pairs, but the use of more pairs is possible by extending the sub-unit that houses the base (14). The movement of the base (14) for the exchange of the filters is performed by an optomechanical guide (15), while the electrical and electronic connections for the automated control of the whole arrangement of the base and the filter pairs are made through a special vacuum window (16).
(d) Coherent diffractive imaging sub-unit (FIG 1,d) (17,18,19,20). In this sub-unit the coherent diffractive imaging of an object is performed. The object is placed on a base (17) and a special optomechanical guide (18) is used to vary the position of the object both in the three spatial dimensions (XYZ) and with respect to the polar angle ϕ and the azimuthal angle θ. The sub-unit has an illumination window and a window for the visual inspection of the interaction area (19). A special CCD camera (20) with high sensitivity in the extreme ultraviolet and soft X-ray range is used to record spectral images.

## Claims

1. A multispectral imaging system in the spectral region of extreme ultraviolet and soft X-ray coherent radiation which includes:
(a) semi-infinite cell sub-unit (a), (1,2,3,4,5,6),
(b) differential pumping sub-unit (b), (7,8,9),
(c) wavelength selection sub-unit (c), (10,11,12,13,14,15,16),
(d) coherent diffractive imaging sub-unit (d), (17,18,19,20), **characterised in that** it has a part (14) for the selection of specific wavelengths of the aforementioned radiation by using pairs of special reflective filters mounted onto an optomechanical base allowing their interchangeability, so as to obtain multispectral imaging of an object by the method of coherent diffractive imaging.

2. A multispectral imaging system in the spectral region of extreme ultraviolet and soft X-ray coherent radiation according to claim 1, **characterised in that** structures containing within them microstructures of different dimensions from ~1 micrometer maximum to ~10 nanometers minimum, can be imaged in an automated manner by alternating pairs of reflective filters (14) or by adding additional pairs of reflective filters, each time imaging structures of different dimensions with the multispectral coherent diffractive imaging system.

3. A multispectral imaging system in the spectral region of extreme ultraviolet and soft X-ray coherent radiation according to claim 1, **characterised in that** it can allow for the nanoimaging of different chemicals on surfaces due to the different absorption edge spectra localised in the extreme ultraviolet and soft X-ray region.

4. A multispectral imaging system in the spectral region of extreme ultraviolet and soft X-ray coherent radiation according to claims 1, 2 and 3, **characterised in that** due to the time duration of the generated extreme ultraviolet and soft X-ray coherent radiation, which is of the order of ~10⁻¹⁵ seconds (fs), imaging of the nanostructure dynamics can be achieved using a pump-probe ultrafast arrangement on time scales of tens of fs.
